# EUROPEAN PATENT APPLICATION

(11) **EP 3 525 471 A1**
(43) Date of publication of application: **14.08.2019**
(21) Application number: 18199819.6
(22) Date of filing: 11.10.2018
(51) Int. Cl.: H04N 21/433, H04N 21/431, H04N 21/435, H04N 21/439, H04N 21/44, G06Q 30/02, G06Q 30/06, H04N 21/2187, H04N 21/81

(54) **SYSTEMS AND METHODS FOR PROVIDING PRODUCT INFORMATION DURING A LIVE BROADCAST**

(30) Priority: 13.02.2018 US 201862630170 P; 21.05.2018 US 201815984777
(71) Applicant: Perfect Corp., 231 New Taipei City (TW)
(72) Inventor: LIN, Kuo-Sheng, 241 New Taipei City (TW); LIN, Yi-Wei, 231 New Taipei City (TW); HUANG, Pei-Wen, 116 Taipei City (TW)
(74) Representative: Stöckeler, Ferdinand

(57) **Abstract**

A computing device obtains a media stream from a server, where the media stream obtained from the server corresponds to live streaming of an event for promoting a product. The computing device receives product information from the server and displays the media stream in a first viewing window. The media stream is monitored for at least one trigger condition, and based on monitoring of the media stream, the computing device determines at least a portion of the product information to be displayed in a second viewing window.

## Description

### CROSS-REFERENCE TO RELATED APPLICATION

This application claims priority to, and the benefit of, U.S. Provisional Patent Application entitled, "Function for viewing detail information for certain products when watching live broadcasting shows," having Serial No. 62/630,170, filed on February 13, 2018, which is incorporated by reference in its entirety.

### TECHNICAL FIELD

The present disclosure generally relates to transmission of media content and more particularly, to systems and methods for providing product information during a live broadcast.

### BACKGROUND

Application programs have become popular on smartphones and other portable display devices for accessing content delivery platforms. With the proliferation of smartphones, tablets, and other display devices, people have the ability to view digital content virtually any time, where such digital content may include live streaming by a media broadcaster. Although individuals increasingly rely on their portable devices for their computing needs, however, one drawback relates to the relatively small size of the displays on such devices when compared to desktop displays or televisions as only a limited amount of information is viewable on these displays. Therefore, it is desirable to provide an improved platform for allowing individuals to access content.

### SUMMARY

In accordance with one embodiment, a computing device obtains a media stream from a server, where the media stream obtained from the server corresponds to live streaming of an event for promoting a product. The computing device receives product information from the server and displays the media stream in a first viewing window. The media stream is monitored for at least one trigger condition, and based on monitoring of the media stream, the computing device determines at least a portion of the product information to be displayed in a second viewing window.

Another embodiment is a system that comprises a memory storing instructions and a processor coupled to the memory and configured by the instructions to obtain a media stream from a server, wherein the media stream obtained from the server corresponds to live streaming of an event for promoting a product. The processor is further configured to receive product information from the server, display the media stream in a first viewing window, and monitor the media stream for at least one trigger condition. Based on the monitoring, the processor is configured to determine at least a portion of the product information to be displayed in a second viewing window.

Another embodiment is a non-transitory computer-readable storage medium storing instructions to be implemented by a computing device having a processor, wherein the instructions, when executed by the processor, cause the computing device to obtain a media stream from a server, wherein the media stream obtained from the server corresponds to live streaming of an event for promoting a product. The processor is further configured to receive product information from the server, display the media stream in a first viewing window, and monitor the media stream for at least one trigger condition. Based on the monitoring, the processor is configured to determine at least a portion of the product information to be displayed in a second viewing window.

Other systems, methods, features, and advantages of the present disclosure will be or become apparent to one with skill in the art upon examination of the following drawings and detailed description. It is intended that all such additional systems, methods, features, and advantages be included within this description, be within the scope of the present disclosure, and be protected by the accompanying claims.

### BRIEF DESCRIPTION OF THE DRAWINGS

Various aspects of the disclosure can be better understood with reference to the following drawings. The components in the drawings are not necessarily to scale, with emphasis instead being placed upon clearly illustrating the principles of the present disclosure. Moreover, in the drawings, like reference numerals designate corresponding parts throughout the several views.
FIG. 1 is a block diagram of a computing device for conveying product information during live streaming of an event in accordance with various embodiments of the present disclosure.
FIG. 2 is a schematic diagram of the computing device of FIG. 1 in accordance with various embodiments of the present disclosure.
FIG. 3 is a top-level flowchart illustrating examples of functionality implemented as portions of the computing device of FIG. 1 for conveying product information during live streaming according to various embodiments of the present disclosure.
FIG. 4 illustrates the signal flow between various components of the computing device of FIG. 1 according to various embodiments of the present disclosure.
FIG. 5 illustrates generation of an example user interface on a computing device embodied as a smartphone according to various embodiments of the present disclosure.
FIG. 6 illustrates the presentation of different portions of the product information based on different trigger conditions according to various embodiments of the present disclosure.
FIG. 7 illustrates portions of the product information being displayed based on user input received by the computing device of FIG. 1 according to various embodiments of the present disclosure.
FIG. 8 illustrates portions of the product information being displayed based on movement of the computing device of FIG. 1 according to various embodiments of the present disclosure.
FIG. 9 illustrates another example user interface whereby product information is displayed based on different trigger conditions according to various embodiments of the present disclosure.

### DETAILED DESCRIPTION

Various embodiments are disclosed for conveying product information during live streaming where supplemental information is provided to a user while the user is viewing a media stream. For some embodiments, the media stream is received from a video streaming server, where the media stream includes product information transmitted by the video streaming server with the media stream. The media stream may correspond to live streaming of a host (*e.g*., a celebrity) promoting one or more cosmetic products, where the products being promoted include product information that may be embedded in the media stream. In other embodiments, the product information may be transmitted separately from the media stream by the video streaming server. For example, the product information may be transmitted by the video streaming server prior to initiation of the live streaming event.

In some embodiments, the presentation of such product information is triggered by conditions that are met during playback of the live video stream. For example, such trigger conditions may be associated with content depicted in the live video stream (*e.g*., a gesture performed by an individual depicted in the live video stream). As another example, such trigger conditions may correspond to input that is generated in response to manipulation of a user interface control at a remote computing device by the individual depicted in the live video stream. Respective viewing windows for presenting the live video stream and for presenting the product information are configured on the fly based on these trigger conditions and based on input by the user viewing the content. For example, a panning motion performed by the user while navigating a viewing window displaying product information may trigger additional product information (*e.g*., the next page in a product information document) to be displayed in that window.

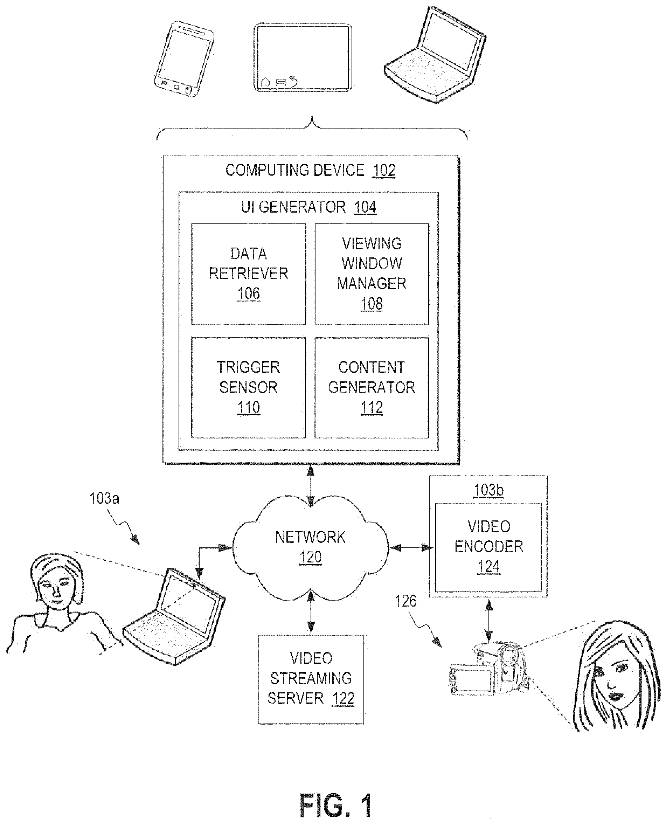

A description of a system for conveying product information during live streaming of an event is now described followed by a discussion of the operation of the components within the system. FIG. 1 is a block diagram of a computing device 102 in which the techniques for conveying product information during live streaming of an event disclosed herein may be implemented. The computing device 102 may be embodied as a computing device such as, but not limited to, a smartphone, a tablet computing device, and so on.

A user interface (UI) generator 104 executes on a processor of the computing device 102 and includes a data retriever 106, a viewing window manager 108, a trigger sensor 110, and a content generator 112. The UI generator 104 is configured to communicate over a network 120 with a video streaming server 122 utilizing streaming audio/video protocols (*e.g*., real-time transfer protocol (RTP)) that allow media content to be transferred in real time. The video streaming server 122 executes a video streaming application and receives video streams from remote computing devices 103a, 103b that record and stream media content by a host. In some configurations, a video encoder 124 in a computing device 103b may be coupled to an external recording device 126, where the video encoder 124 uploads media content to the video streaming server 122 over the network 120. In other configurations, the computing device 103a may have digital recording capabilities integrated into the computing device 103a. For some embodiments, trigger conditions may correspond to actions taken by the host at a remote computing device 103a, 103b. For example, for some embodiments, the host at a remote computing device 103a, 103b can manipulate a user interface to control what content is displayed to the user of the computing device 102.

Referring back to computing device 102, the data retriever 106 is configured to obtain a media stream obtained by the computing device 102 from the video streaming server 122 over the network 120. The media stream may be encoded in various formats including, but not limited to, Motion Picture Experts Group (MPEG)-1, MPEG-2, MPEG-4, H.264, Third Generation Partnership Project (3GPP), 3GPP-2, multimedia, Audio Video Interleave (AVI), Digital Video (DV), QuickTime (QT) file, Windows Media Video (WMV), Advanced System Format (ASF), Real Media (RM), Flash Media (FLV), 360-degree video, or any number of other digital formats. The data retriever 106 is further configured to extract product information transmitted by the video streaming server 122 with the media stream. In some embodiments, the product information may be embedded in the media stream. However, the product information may also be transmitted separately from the media stream.

The viewing window manager 108 is configured to display the media stream in a viewing window of a user interface. The trigger sensor 110 is configured to analyze content depicted in the media stream to determine whether trigger conditions exist during streaming of the media content. Such trigger conditions are utilized for displaying portions of the product information in conjunction with the media stream. The viewing window manager 108 is configured to display this product information in one or more viewing windows separate from the viewing window displaying the media content. The trigger sensor 110 determines what portion of the product information to be displayed in one or more viewing windows. For example, certain trigger conditions may cause step-by-step directions relating to a cosmetic product to be displayed while other trigger conditions may cause purchasing information for the cosmetic product to be displayed.

The content generator 112 is configured to dynamically adjust the size and placement of each of the various viewing windows based on a total viewing display area of the computing device 102. For example, if trigger conditions occur that result in product information being displayed in two viewing windows, the content generator 112 is configured to allocate space based on the total viewing display area for not only the two viewing windows displaying the product information but also for the viewing window used for displaying the media stream. Furthermore, the content generator 112 is configured to update content shown in the second viewing window in response to user input received by the computing device 102. Such user input may comprise, for example, a panning motion performed by the user while viewing and navigating the product information displayed in a particular viewing window. The content generator 112 may be configured to sense that the panning motion exceeds a threshold angle and in response to detecting this condition, the content generator 112 may be configured to update the content in that particular viewing window. Updating the content may comprise, for example, advancing to the next page of a product manual.

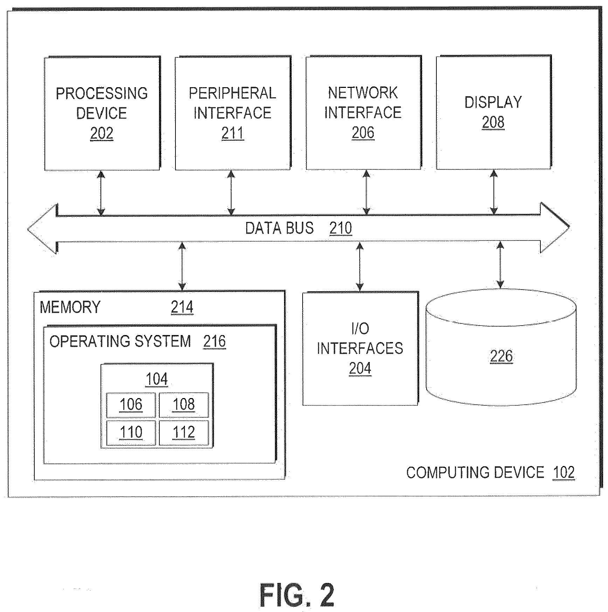

FIG. 2 illustrates a schematic block diagram of the computing device 102 in FIG. 1. The computing device 102 may be embodied in any one of a wide variety of wired and/or wireless computing devices, such as a desktop computer, portable computer, dedicated server computer, multiprocessor computing device, smart phone, tablet, and so forth. As shown in FIG. 2, each of the computing device 102 comprises memory 214, a processing device 202, a number of input/output interfaces 204, a network interface 206, a display 208, a peripheral interface 211, and mass storage 226, wherein each of these components are connected across a local data bus 210.

The processing device 202 may include any custom made or commercially available processor, a central processing unit (CPU) or an auxiliary processor among several processors associated with the computing device 102, a semiconductor based microprocessor (in the form of a microchip), a macroprocessor, one or more application specific integrated circuits (ASICs), a plurality of suitably configured digital logic gates, and other well known electrical configurations comprising discrete elements both individually and in various combinations to coordinate the overall operation of the computing system.

The memory 214 may include any one of a combination of volatile memory elements (*e.g*., random-access memory (RAM, such as DRAM, and SRAM, *etc.*)) and nonvolatile memory elements (*e.g*., ROM, hard drive, tape, CDROM, *etc.*). The memory 214 typically comprises a native operating system 216, one or more native applications, emulation systems, or emulated applications for any of a variety of operating systems and/or emulated hardware platforms, emulated operating systems, etc. For example, the applications may include application specific software which may comprise some or all the components of the computing device 102 depicted in FIG. 1. In accordance with such embodiments, the components are stored in memory 214 and executed by the processing device 202, thereby causing the processing device 202 to perform the operations/functions disclosed herein. One of ordinary skill in the art will appreciate that the memory 214 can, and typically will, comprise other components which have been omitted for purposes of brevity. For some embodiments, the components in the computing device 102 may be implemented by hardware and/or software.

Input/output interfaces 204 provide any number of interfaces for the input and output of data. For example, where the computing device 102 comprises a personal computer, these components may interface with one or more user input/output interfaces 204, which may comprise a keyboard or a mouse, as shown in FIG. 2. The display 208 may comprise a computer monitor, a plasma screen for a PC, a liquid crystal display (LCD) on a hand held device, a touchscreen, or other display device.

In the context of this disclosure, a non-transitory computer-readable medium stores programs for use by or in connection with an instruction execution system, apparatus, or device. More specific examples of a computer-readable medium may include by way of example and without limitation: a portable computer diskette, a random access memory (RAM), a read-only memory (ROM), an erasable programmable read-only memory (EPROM, EEPROM, or Flash memory), and a portable compact disc read-only memory (CDROM) (optical).

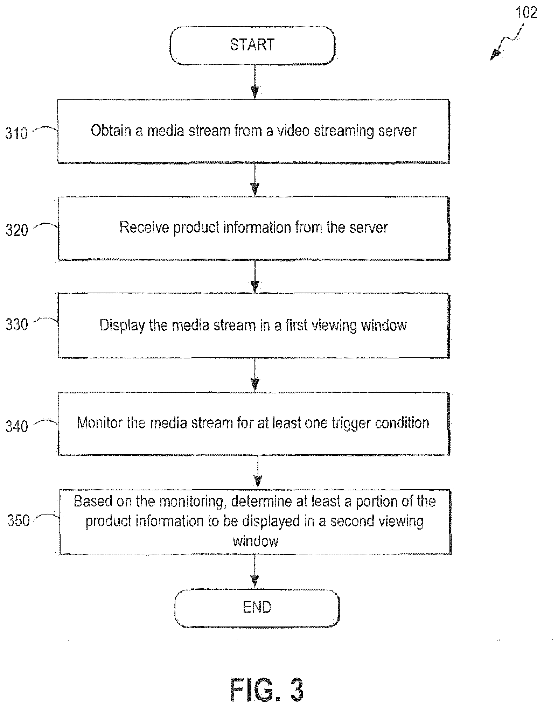

Reference is made to FIG. 3, which is a flowchart in accordance with various embodiments for conveying product information during live streaming of an event performed by the computing device 102 of FIG. 1. It is understood that the flowchart of FIG. 3 provides merely an example of the different types of functional arrangements that may be employed to implement the operation of the various components of the computing device 102. As an alternative, the flowchart of FIG. 3 may be viewed as depicting an example of steps of a method implemented in the computing device 102 according to one or more embodiments.

Although the flowchart of FIG. 3 shows a specific order of execution, it is understood that the order of execution may differ from that which is depicted. For example, the order of execution of two or more blocks may be scrambled relative to the order shown. Also, two or more blocks shown in succession in FIG. 3 may be executed concurrently or with partial concurrence. It is understood that all such variations are within the scope of the present disclosure.

At block 310, the computing device 102 obtains a media stream from a video streaming server 122. The media stream obtained from the video streaming server 122 may correspond to live streaming of an event for promoting a product. For example, the event may comprise an individual promoting a line of cosmetic products during a live broadcast.

At block 320, the computing device 102 receives product information from the video streaming server 122. The product information may comprise different types of data associated with one or more cosmetic products where the data may include step-by-step directions on how to apply one or more cosmetic products, purchasing information for one or more cosmetic products, rating information, product images, a Uniform Resource Locator (URL) of an online retailer for a product web page selling a cosmetic product, a video promoting one or more products, a thumbnail graphical representation accompanied by audio content output by the computing device 102, a barcode for a product, and so on. Where the product information comprises step-by-step directions, such product information may be partitioned into pages. The different pages of the step-by-step directions may be accessed by user input received by the computing device 102, as described in more detail below. The product information may also comprise a Uniform Resource Locator (URL) of an online retailer for a product web page selling a cosmetic product.

At block 330, the computing device 102 displays the media stream in a first viewing window. At block 340, the computing device 102 monitors the media stream for one or more trigger conditions. In response to detecting one or more trigger conditions, the computing device 102 generates at least one trigger signal. The type of generated trigger signal will then be used to determine which portions of the product information to display. For example, one trigger signal may cause step-by-step directions on how to apply the cosmetic product to be displayed in a viewing window while another trigger signal may cause purchasing information for the cosmetic product to be displayed in the viewing window (or in a new viewing window).

The computing device 102 may be configured to monitor for the presence of one or more trigger conditions. One trigger condition may comprise a voice command expressed in the media stream. For example, a word or phrase spoken by an individual depicted in the media stream may correspond to a trigger condition. Another trigger condition may comprise a gesture performed by an individual depicted in the media stream. Yet another trigger condition may comprise an input signal received from the individual depicted in the media stream being displayed, where the input signal is received separately from the media stream, and where the input is generated responsive to manipulation of a user interface control by the individual at a remote computing device. For example, the individual depicted in the media stream may utilize a remote computing device 103a, 103b (FIG. 1) to press a user interface control, thereby causing a trigger condition to be detected by the computing device 102. In response to detecting this trigger condition, the computing device 102 displays a corresponding portion of the product information received by the computing device 102. Another trigger condition may comprise an input signal generated by a user of the computing device 102, wherein the input is generated responsive to manipulation of a user interface control by the user at the computing device 102.

At block 350, the computing device 102 determines at least a portion of the product information to be displayed in a second viewing window based on the monitoring. For some embodiments, this is performed based on the one or more trigger signals, where different portions of the product information are displayed based on the type of the generated trigger signal.

For some embodiments, the computing device 102 updates content shown in the second viewing window responsive to user input. This may comprise receiving user input from a user viewing the media stream and based on the user input, performing a corresponding action for updating the content displayed in the second viewing window. For some embodiments, the user input may comprise a panning motion exceeding a predetermined threshold performed by the user while viewing the content in the second viewing window, where the corresponding action comprises updating the second viewing window to display another portion of the product information. For some embodiments, the panning motion is performed using one or more gestures performed on a touchscreen interface of the computing device 102, a keyboard of the computing device 102, a mouse, and/or panning or tilting of the computing device 102. Thereafter, the process in FIG. 3 ends.

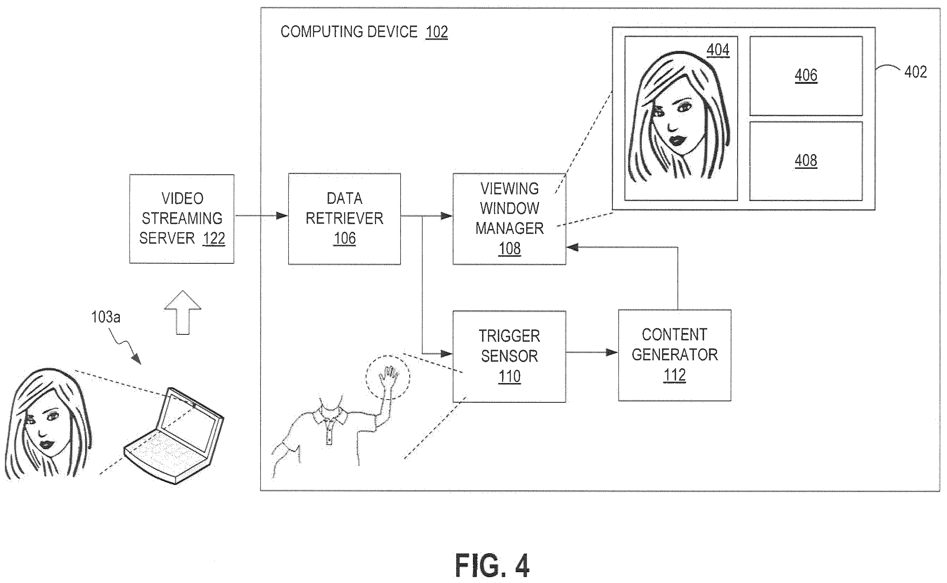

Having described the basic framework of a system for conveying product information during live streaming of an event, reference is made to FIG. 4, which illustrates the signal flow between various components of the computing device 102 of FIG. 1. To begin, a live event captured by a digital recording device of a remote computing device 103a is streamed to the computing device 102 via the video streaming server 122. The data retriever 106 obtains the media stream from the video streaming server 122 and extracts product information transmitted by the video streaming server 122 in conjunction with the media stream.

As discussed above, the product information may be embedded within the media stream received by the data retriever 106. However, the product information may also be received separately from the media stream. In such embodiments, the product information may be obtained by the data retriever 106 directly from the remote computing device 103a. In various embodiments, the presentation of such product information is triggered by conditions that are met during playback of the live video stream. For example, such trigger conditions may be associated with content depicted in the live video stream (*e.g*., a gesture performed by an individual depicted in the live video stream).

The viewing window manager 108 displays the media stream obtained by the viewing window manager 108 in a first viewing window 404 of a user interface 402 presented on a display of the computing device 102. As described in more detail below, the user interface 402 may include one or more other viewing windows 406, 408 for displaying various portions of the product information obtained by the data retriever 106.

The trigger sensor 110 analyzes content depicted in the media stream and monitors for the presence of one or more trigger conditions. For example, such trigger conditions may comprise a specific gesture performed by an individual depicted in the live video stream. Based on the analysis, the trigger sensor 110 determines at least a corresponding portion of the product information to be displayed in a second viewing window 406, 408.

The content generator 112 adjusts the size and placement of the first viewing window 404 and of the one or more viewing windows 406, 408 displaying product information, where the size and placement of the viewing windows 404, 406, 408 are based on a total viewing display area of the computing device 102. The content generator 112 also updates the content shown in the one or more viewing windows 406, 408 displaying product information, where this is performed in response to user input.

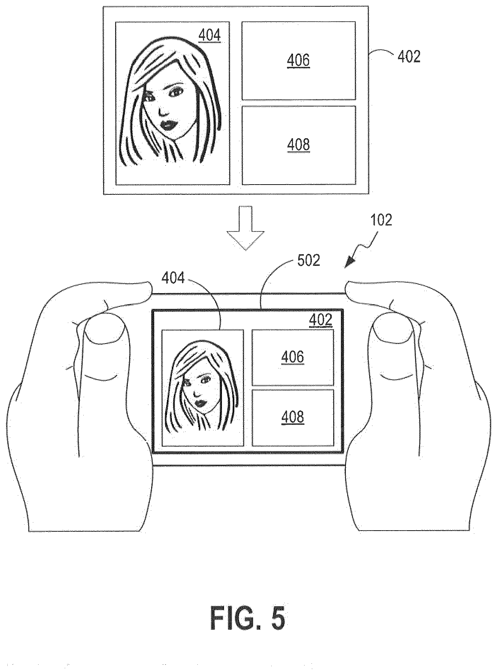

FIG. 5 illustrates generation of an example user interface 402 on a computing device 102 embodied as a smartphone. In accordance with various embodiments, the content generator 112 (FIG. 1) takes into account the total display area 502 of the computing device 102 and adjusts the size and placement of each of the viewing windows 40 and the second viewing window based on a total viewing display area of the computing device. Thus, the content generator 112 may generate a larger number of viewing windows for devices (*e.g*., laptop) with larger display areas.

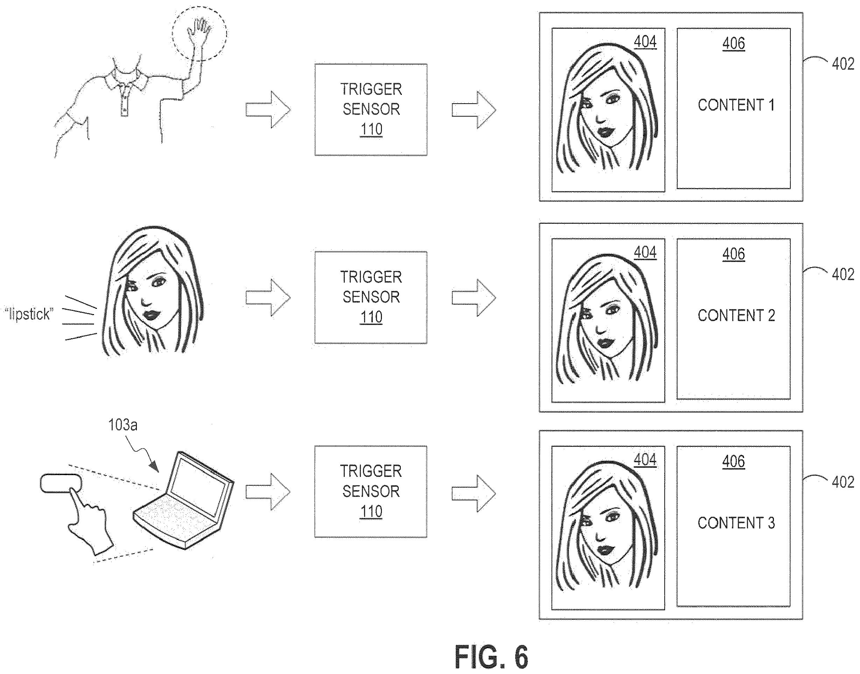

FIG. 6 illustrates the presentation of different portions of the product information based on different trigger conditions. In response to detecting one or more trigger conditions, the trigger sensor 110 in the computing device 102 generates at least one trigger signal. The type of generated trigger signal will then be used to determine which portions of the product information to display to the user. One trigger signal may cause step-by-step directions on how to apply the cosmetic product to be displayed in a viewing window while another trigger signal may cause purchasing information for the cosmetic product to be displayed in the viewing window (or in a new viewing window).

In the examples shown in FIG. 6, one trigger condition corresponds to a particular gesture (*e.g*., a waving motion). This causes content to be displayed in a viewing window 406 while the media stream is displayed in another viewing window 404 of the user interface 402. Another trigger condition corresponds to a verbal cue spoken by an individual depicted in the media stream. This causes content 2 to be displayed in the viewing window 406. Note that content 2 may alternatively be displayed in a new viewing window (not shown). Another trigger condition corresponds to a user input originating from the remote computing device 103a recording the live event. In the example shown, the user clicks on a button displayed on the display of the remote computing device 103a. This causes content 3 to be displayed in the viewing window 406. Again, content 3 may alternatively be displayed in a new viewing window (not shown).

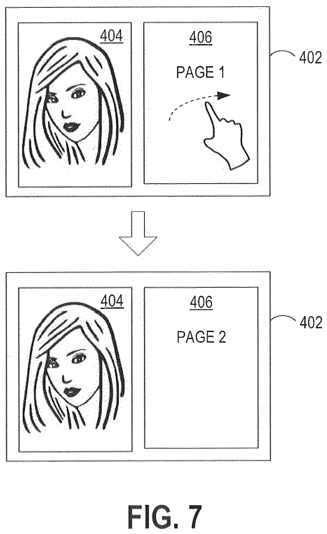

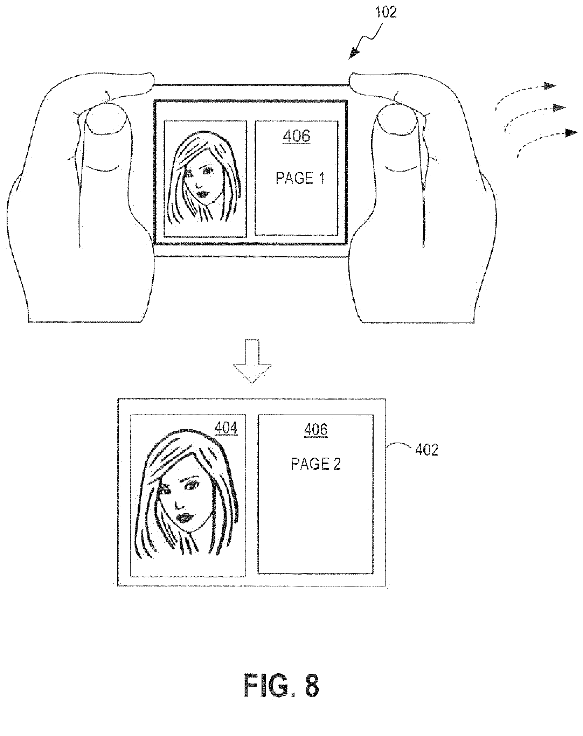

FIG. 7 illustrates portions of the product information being displayed based on user input received by the computing device 102 of FIG. 1. In some embodiments, the user input may comprise a panning motion performed by the user while navigating a viewing window 406 displaying product information. If the panning angle or distance exceeds a threshold angle/distance, additional product information (*e.g*., the next page in a product information document) is displayed in the viewing window 406. Note that a panning motion may be performed using one or more gestures performed on a touchscreen interface of the computing device 102, as shown in FIG. 7. Alternatively, a panning motion may be performed using a keyboard or other input device (*e.g*., stylus) of the computing device. As shown in FIG. 8, a panning motion may also be performed by panning or tilting the computing device 102 while viewing, for example, a 360-degree video.

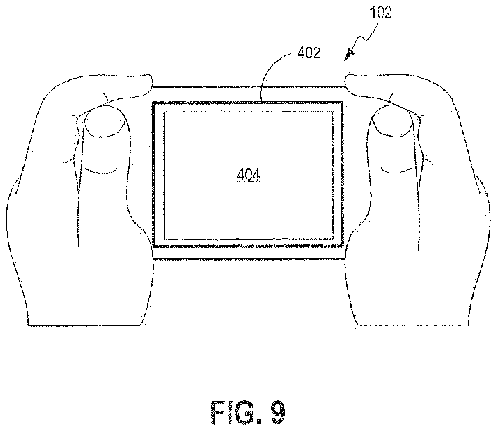

FIG. 9 illustrates another example user interface whereby product information is displayed based on different trigger conditions according to various embodiments of the present disclosure. Note that in accordance with exemplary embodiments, both a host providing video streaming content via a remote computing device 103a, 103b (FIG. 1) and a user of the computing device 102 can control how the content (*e.g*., product information) is displayed on the computing device 102. Notably, the host has some level of control over what content that the user of the computing device 102 views.

In some embodiments, only product information is displayed in a single viewing window 404 of the user interface 402, as shown in FIG. 9. This is in contrast to the example user interface shown, for example, in FIG. 7 where a video stream of the host is depicted in the first viewing window 404 while product information is displayed in a second viewing window 406. In this regard, different layouts can be implemented in the user interface 402. For some embodiments, the host generating the video stream via a remote computing device 103a, 103b can customize the layout of the user interface 402. Similarly, the user of the computing device 102 can customize the layout of the user interface 402. For example, in some instances, the user of the computing device 102 may wish to incorporate a larger display area for viewing product information. In such instances, the user of the computing device 102 may customize the user interface 402 such that only a single viewing window 404 is shown that displays product information.

It should be emphasized that the above-described embodiments of the present disclosure are merely possible examples of implementations set forth for a clear understanding of the principles of the disclosure. Many variations and modifications may be made to the above-described embodiment(s) without departing substantially from the spirit and principles of the disclosure. All such modifications and variations are intended to be included herein within the scope of this disclosure and protected by the following claims.

## Claims

1. A method implemented in a computing device, comprising:
obtaining a media stream from a server, wherein the media stream obtained from the server corresponds to live streaming of an event for promoting a product;
receiving product information from the server;
displaying the media stream in a first viewing window;
monitoring the media stream for at least one trigger condition; and
based on the monitoring, determining at least a portion of the product information to be displayed in a second viewing window.

2. The method of claim 1, wherein monitoring the media stream for at least one trigger condition in the media stream comprises responsive to detecting at least one trigger condition, generating at least one trigger signal.

3. The method of claim 2, wherein the at least one trigger condition comprises at least one of:
a voice command expressed in the media stream;
a gesture performed by an individual depicted in the media stream;
an input signal received from the individual depicted in the media stream being displayed, wherein the input signal is received separately from the media stream, wherein the input is generated responsive to manipulation of a user interface control by the individual at a remote computing device; and
an input signal generated by a user of the computing device, wherein the input is generated responsive to manipulation of a user interface control by the user at the computing device.

4. The method of claim 2 or 3, wherein determining the at least the portion of the product information to be displayed in the second viewing window is performed based on the at least one trigger signal, wherein different portions of the product information are displayed based on a type of the generated trigger signal.

5. The method of one of claims 1 to 4, wherein the product information comprises at least one of:
product images;
textual information relating to products, the textual information being partitioned into pages;
product purchasing information;
a Uniform Resource Locator (URL) of an online retailer for a product web page selling a cosmetic product;
video promoting one or more products;
a thumbnail graphical representation accompanied by audio content output by the computing device; and
a barcode.

6. The method of one of claims 1 to 5, further comprising:
receiving user input from a user viewing the media stream on the computing device; and
based on the user input, performing a corresponding action for updating content displayed in the second viewing window.

7. The method of claim 6, wherein the user input comprises a panning motion exceeding a predetermined threshold performed by the user while viewing the content in the second viewing window, wherein the corresponding action comprises updating the second viewing window to display another portion of the product information.

8. The method of claim 7, wherein the panning motion is performed using at least one of: one or more gestures performed on a touchscreen interface of the computing device, a mouse, a keyboard of the computing device, and panning or tilting of the computing device.

9. The method of one of claims 6 to 8, wherein updating the content shown in the second viewing window responsive to the user input comprises:
receiving user input from an individual depicted in the media stream being displayed, wherein the user input is received separately from the media stream, wherein the input is generated responsive to manipulation of a user interface control by the individual at a remote computing device; and
based on the user input, performing a corresponding action for updating the content displayed in the second viewing window.

10. A system, comprising:
a memory storing instructions;
a processor coupled to the memory and configured by the instructions to at least perform a method of one of claims 1 to 9.

11. A non-transitory computer-readable storage medium storing instructions to be implemented by a computing device having a processor, wherein the instructions, when executed by the processor, cause the computing device to at least perform a method of one of claims 1 to 9.
